# EUROPÄISCHE PATENTSCHRIFT

(11) **EP 3 658 788 B1**
(45) Veröffentlichungstag und Bekanntmachung des Hinweises auf die Patenterteilung: **11.08.2021**
(21) Anmeldenummer: 18737230.5
(22) Anmeldetag: 02.07.2018
(51) Int. Cl.: F16B 7/18, F16B 37/04

(54) **BEFESTIGER FÜR EINE BEFESTIGUNG AN EINER MONTAGESCHIENE**
FASTENER FOR A FASTENING ON A MOUNTING RAIL
DISPOSITIF DE FIXATION POUR FIXATION À UN RAIL DE MONTAGE

(30) Priorität: 26.07.2017 DE 102017116858
(43) Veröffentlichungstag der Anmeldung: 03.06.2020
(73) Patentinhaber: fischerwerke GmbH & Co. KG, 72178 Waldachtal (DE)
(72) Erfinder: FÖRMER, Thomas, 72401 Haigerloch-Gruol (DE)
(86) Internationale Anmeldenummer: PCT/EP2018/067733
(87) Internationale Veröffentlichungsnummer: WO 2019/020320

(56) Entgegenhaltungen:
- WO-A1-2016/200963
- DE-U1- 29 620 834
- US-A- 4 146 074
- US-A- 4 661 030

## Beschreibung

Die Erfindung betrifft einen Befestiger für eine Befestigung an einer Montageschiene mit den Merkmalen des Oberbegriffs des Anspruchs 1.

Montageschienen sind typischerweise Profile aus Stahl mit einem rechteckigen Querschnitt, die an einer Wand oder einer Decke befestigt werden und zur Befestigung von beispielsweise Kabel- oder Rohrschellen, Kabelpritschen oder Sonstigem dienen. Montageschienen weisen üblicherweise einen in einer Längsrichtung durchgehenden Längsschlitz in einer Längsseite und/oder Langlöcher in vorzugsweise mehreren Längsseiten auf. Durch den Längsschlitz oder ein Langloch lässt sich ein Schraubenkopf einer Hammerkopfschraube in die Montageschiene einbringen, wenn ihr Schraubenkopf in Längsrichtung des Längsschlitzes oder des Langlochs ausgerichtet ist. Ein Schraubenschaft steht durch den Längsschlitz oder das Langloch aus der Montageschiene vor, mit ihm lässt sich der Schraubenkopf in der Montageschiene quer stellen, so dass er die Montageschiene innen seitlich des Längsschlitzes oder an Längsseiten des Langlochs hintergreift. Durch Aufschrauben und Festziehen einer Mutter von außen auf den Schraubenschaft lässt sich die Hammerkopfschraube an der Montageschiene festlegen und an dem nach außen aus der Montageschiene vorstehenden Schraubenschaft ein Gegenstand befestigen. Eine solche Hammerkopfschraube kann allgemein als Befestiger für eine Befestigung an einer Montageschiene im Sinne der Erfindung aufgefasst werden, wobei die Erfindung nicht auf Hammerkopfschrauben beschränkt ist.

Aus der internationalen Patentanmeldung WO 2016/200 963 A1 ist ein Befestiger für einen kubischen Rahmen, der aus C-Stahlprofilen zusammengesetzt ist, bekannt. Der Befestiger dient zum Verbinden der Stahlprofile. Er weist eine Schraube, eine Rechteckmutter und einen Käfig mit einer quaderförmigen Hüllfläche und mit einem rechteckigen Flansch mit einem Mittelloch an einer Stirnseite auf. Zwei einander diametral gegenüberliegende Ecken der Rechteckmutter sind abgeschrägt. Die Schraube ist durch das Mittelloch des Flansches des Käfigs in die Rechteckmutter geschraubt, die in dem Käfig aufgenommen ist. Sie lässt sich durch Drehen der Schraube in dem Käfig quer stellen, so dass sie an gegenüberliegenden Seiten aus dem Käfig vorsteht und axial im Käfig beweglich ist, so dass sie mit der Schraube in Richtung des Flansches bewegt werden kann.

Zu einer Befestigung an einem der C-Stahlprofile wird der Befestiger durch ein Rechteckloch in dem Stahlprofil gesteckt, so dass der Flansch des Käfigs außen am Stahlprofil anliegt. Durch Drehen der Schraube wird die Rechteckmutter im Stahlprofil quer gestellt und mit der Schraube von innen gegen das Stahlprofil gespannt. Die im Stahlprofil quer stehende Rechteckmutter hintergreift das Stahlprofil innen an zwei gegenüberliegenden Längsrändern des Rechtecklochs.

Aufgabe der Erfindung ist, einen alternativen Befestiger der vorstehend erläuterten Art vorzuschlagen.

Diese Aufgabe wird erfindungsgemäß durch die Merkmale des Anspruchs 1 gelöst. Der erfindungsgemäße Befestiger mit den Merkmalen des Anspruchs 1 ist zu einer Befestigung an einer Montageschiene und zur Befestigung eines Gegenstands wie beispielsweise einer Kabel- oder Rohrschelle oder einer Kabelpritsche an einer Montageschiene vorgesehen. Der Befestiger weist ein Widerlager auf, das zu einer Anlage von innen an einer Montageschiene seitlich eines Langlochs oder eines Schlitzes vorgesehen ist. Das Widerlager weist ein Gewinde zu einer Befestigung auf, dessen Achse nachfolgend auch als Achse des Befestigers bezeichnet werden wird. Das Gewinde des Widerlagers kann ein Innengewinde zum Einschrauben beispielsweise einer Gewindestange oder einer Schraube und das Widerlager in diesem Fall eine Mutter, insbesondere eine Rechteckmutter oder eine sonstige Mutter sein, die in einer Radialebene zur Achse länger als breit ist. Das Gewinde des Widerlagers kann auch ein Außengewinde und das Widerlager beispielsweise ein Schraubenkopf einer Schraube, insbesondere einer Hammerkopfschraube sein, deren Schraubenkopf in einer Radialebene zur Achse länger als breit ist. Das Gewinde des Widerlagers ist in diesem Fall ein Schraubengewinde der Schraube bzw. Hammerkopfschraube.

Der erfindungsgemäße Befestiger weist ein Druckstück mit einem zu der Achse des Befestigers und damit zu der Achse des Gewindes des Widerlagers koaxialen Durchgangsloch auf. Ein kleinster Durchmesser oder Querschnitt des Durchgangslochs ist nicht kleiner als ein Außendurchmesser des Gewindes des Widerlagers, so dass ein Schraubenschaft des Widerlagers, eine in das (Innen-)Gewinde des Widerlagers geschraubte Gewindestange oder dergleichen durch das Durchgangsloch des Druckstücks durchgeführt werden kann. Das Druckstück weist eine Anlagefläche in einer Radialebene der Achse und damit zugleich in einer Radialebene des Durchgangslochs auf, die zu einer Anlage von außen an der Montageschiene vorgesehen ist. Die Anlagefläche des Druckstücks muss nicht flächig durchgehend sein, es genügt, wenn das Druckstück an einigen Stellen außen an der Montageschiene anliegt, und zwar so anliegt, dass die Achse des Gewindes rechtwinklig zu einer Seite der Montageschiene, an der der Befestiger befestigt ist oder befestigt wird, absteht. Eine exakte Rechtwinkligkeit ist nicht zwingend, eine Winkelabweichung ist möglich.

In einer Richtung radial zur Achse des Befestigers ist das Widerlager länger als breit, so dass es längs zu einem Schlitz oder einem Langloch eine Montageschiene ausgerichtet durch den Schlitz oder das Langloch in die Montageschiene eingebracht und durch Schwenken um die Achse des Befestigers in der Montageschiene schräg oder quer gestellt werden kann, so dass das Widerlager die Montageschiene innen seitlich des Schlitzes oder an Längsseiten des Langlochs hintergreift. "Querstellen" bedeutet ein Schwenken des Widerlagers um 90° in Bezug zu einer Längsrichtung des Schlitzes oder Langlochs in der Montageschiene, "Schrägstellen" ein Schwenken von weniger oder auch mehr als 90°, allerdings weniger als 180°. Ein anderes Einbringen und Festlegen als das beschriebene schließt die Erfindung nicht aus. Das Widerlager ist in einer Richtung radial zur Achse schmaler als das Druckstück, so dass das Widerlager wie beschrieben längs ausgerichtet durch einen Schlitz oder ein Langloch in die Montageschiene einbringbar ist, wogegen das Druckstück mit seiner Anlagefläche seitlich neben dem Schlitz oder dem Langloch außen an der Montageschiene anliegt. Das Widerlager ist in Bezug auf das Druckstück axial beweglich und um die Achse des Befestigers, die zugleich die Achse des Durchgangslochs des Druckstücks ist, schwenkbar oder drehbar. Es lassen sich das in der Montageschiene quer- oder schräg gestellte Widerlager und das außen an der Montageschiene befindliche Druckstück zusammenspannen und dadurch der Befestiger an der Montageschiene festspannen.

Des Weiteren weist der erfindungsgemäße Befestiger einen Bügel auf, der an dem Druckstück angeordnet ist und dessen lichte Weite mindestens so groß wie das Widerlager lang ist. Der Bügel ist insbesondere U- oder C-förmig, er kann allerdings auch als Gehäuse oder Käfig ausgeführt bzw. aufgefasst werden. Der Bügel umgreift das Widerlager und seine lichte Weite ist mindestens so groß, wie das Widerlager lang ist, damit das Widerlager längs ausgerichtet in dem Bügel Platz findet. "Längs ausgerichtet" bedeutet parallel zu einem Joch des Bügels bzw. in Richtung von einem zu einem anderen Schenkel des Bügels. Schenkel des Bügels können so eng angeordnet sein, dass das Widerlager bei einem Schwenken gegen sie stößt, so dass die Schenkel des Bügels ein Schwenken des Widerlagers begrenzen. Das Widerlager ist längs zum Bügel ausgerichtet, wenn es an den Schenkeln des Bügels anliegt. Das Druckstück ist drehfest mit dem Bügel verbunden, während das Widerlager relativ zum Bügel um die Achse drehbar ist.

Auf einer dem Druckstück abgewandten Seite des Widerlagers sind zwei elastische Kragarme in dem Bügel angeordnet, die schräg zur Achse des Befestigers verlaufen und die senkrecht zu einer Axialebene des Befestigers gesehen einander kreuzen. Als "Axialebene" wird hier eine radial zur Achse gespannte Ebene bezeichnet, in der die Achse liegt. Insbesondere sind die beiden elastischen Kragarme in axialer Richtung des Befestigers gesehen nebeneinander, also bezogen auf die Axialebene versetzt angeordnet. Dem Widerlager ferne Enden der elastischen Kragarme sind am Bügel festgelegt, insbesondere, bezogen auf die Achse, sich symmetrisch gegenüberliegend am Bügel angeordnet. Vorzugsweise sind die elastischen Kragarme einstückige Bestandteile des Bügels und ihre dem Widerlager ferne Enden gehen einstückig in den Bügel über. Freie Enden der elastischen Kragarme beaufschlagen das Widerlager elastisch in Richtung des Druckstücks. Die elastischen Kragarme können auch als Federelemente aufgefasst werden, die das Widerlager in Richtung des Druckstücks und, wenn das Widerlager des erfindungsgemäßen Befestigers wie vorgesehen durch einen Schlitz oder ein Langloch in eine Montageschiene eingebracht und in der Montageschiene quer- oder schräg gestellt worden ist, das Widerlager von innen gegen die Montageschiene beaufschlagen. Durch Reibung oder eventuell auch einen Formschluss mittels beispielsweise einer Verzahnung ist der Befestiger gegen unbeabsichtigtes Verschieben an der Montageschiene gehalten.

In bevorzugter Ausgestaltung der Erfindung begrenzen die Kragarme einen Schwenkwinkel des Widerlagers um die Achse des Befestigers auf etwa 90°, so dass das Widerlager längs zu dem Bügel ausgerichtet werden kann, so dass es durch einen Schlitz oder ein Langloch in die Montageschiene eingebracht und in der Montageschiene quer gestellt werden kann. Beim Einbringen des Widerlagers durch den Schlitz oder das Langloch in die Montageschiene wird der Bügel ebenfalls in den Schlitz oder das Langloch in die Montageschiene eingebracht. Es ist deswegen für das Einbringen in die Montageschiene notwendig, dass das Widerlager und der Bügel durch Schwenken um die Achse des Befestigers so zueinander ausgerichtet sind bzw. werden, dass das Widerlager höchstens so weit seitlich aus dem Bügel vorsteht, dass es zusammen mit dem Bügel durch den Schlitz oder das Langloch in die Montageschiene eingebracht werden kann. Diese Ausrichtung des Widerlagers in Bezug zu dem Bügel kann auch als Ausrichtung in Längsrichtung des Bügels aufgefasst werden. Ein Schwenken des Widerlagers um weniger als 90°, also beispielsweise um 30°, 45° oder 60°, oder um mehr als 90°, also beispielsweise um 120°, 135° oder 150°, allerdings um weniger als 180°, ist möglich, wodurch das Widerlager der Montageschiene schräg- anstatt quergestellt wird.

In einer der Begrenzung des Schwenkwinkels des Widerlagers in Bezug zum Druckstück durch die Kragarme entgegengesetzten Richtung beschränkt gemäß einer Ausgestaltung der Erfindung der Bügel den Schwenkwinkel des Widerlagers so, dass in axialer Richtung des Befestigers gesehen der Bügel und das Widerlager parallel sind. Eine begrenzte Winkelabweichung ist möglich, der Bügel und das Widerlager müssen sich zwischen zwei gedachten, zueinander parallelen und achsparallelen Ebenen befinden, deren Abstand nicht größer als der Schlitz oder das Langloch der Montageschiene breit ist, so dass das Widerlager und der Bügel durch den Schlitz oder das Langloch in die Montageschiene einbringbar sind.

Eine Ausgestaltung der Erfindung sieht eine Lochscheibe als Druckstück vor.

Vorzugsweise ist am Bügel ein Anschlag angeordnet, der insbesondere zum Anschlag des Widerlagers dient und verhindert, dass das Widerlager entgegen einer planmäßig vorgesehen Drehrichtung verdreht und/oder zum Lösen des Befestigers zu weit Zurückgedreht werden kann. Zudem oder alternativ kann der Anschlag zur Anlage eines Kragarms, insbesondere eines freien Endes eines Kragarms vorgesehen sein. Durch die Anlage des Kragarms am Anschlag wird der Kragarm gegen ein Verbiegen beim Verdrehen des Widerlagers stabilisiert, so dass er auch beim Verdrehen seine Funktion erfüllen kann.

Vorzugsweise sind am Bügel zwei Anschläge symmetrisch zur Achse angeordnet sind, jeweils ein Anschlag für einen der Kragarme.

Die Erfindung wird nachfolgend anhand eines in der Zeichnung dargestellten Ausführungsbeispiels näher erläutert. Es zeigen:

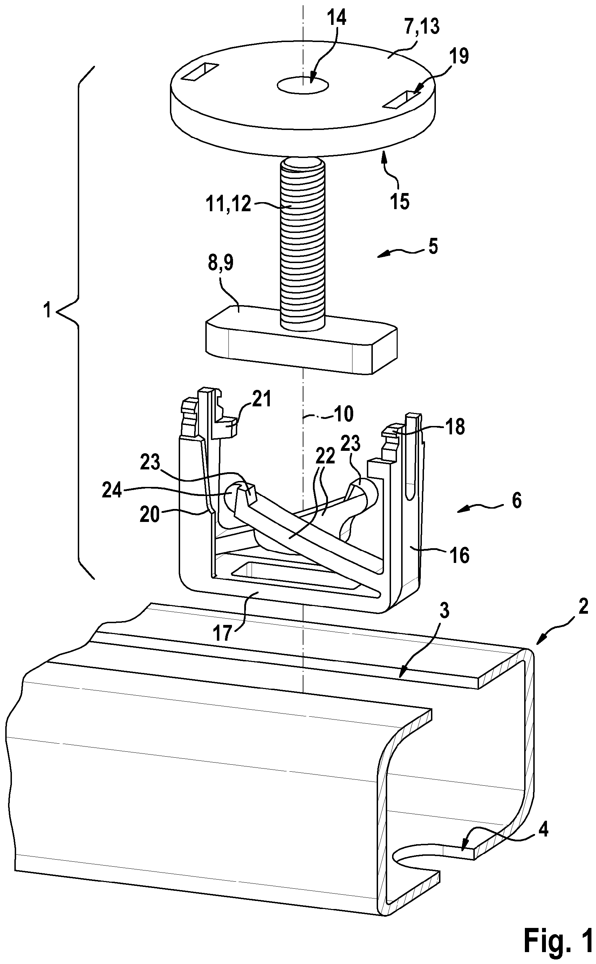

- Figur 1: einen Befestiger gemäß der Erfindung in einer perspektivischen Explosionsdarstellung; und
- Figuren 2 bis 4: den Befestiger aus Figur 1 in Seitenansicht in drei verschiedenen Stellungen.

Der in der Zeichnung dargestellte, erfindungsgemäße Befestiger 1 ist zu einer Befestigung an einer Montageschiene 2 vorgesehen. Die Montageschiene 2 ist im Ausführungsbeispiel eine Profilschiene aus Stahl mit einem rechteckigen Querschnitt, einem in einer Längsrichtung durchgehenden Längsschlitz 3 und Langlöchern 4 in einer dem Längsschlitz 3 gegenüberliegenden Seite. Die Montageschiene 2 wird beispielsweise an einer Wand oder Decke befestigt, und zwar so, dass der Längsschlitz 3 zugänglich ist.

Der Befestiger 1 weist eine Hammerkopfschraube 5 aus insbesondere Stahl oder einem anderen Metall, einen U-förmigen Bügel 6, insbesondere aus Kunststoff, und eine Lochscheibe 7 auf, die beispielsweise aus Stahl, einem anderen Metall oder Kunststoff bestehen kann. Ein im Wesentlichen rechteckiger Schraubenkopf 8 mit abgeschrägten Ecken der Hammerkopfschraube 5 bildet ein Widerlager 9 des erfindungsgemäßen Befestigers 1, das länger als breit sind, das länger ist als der Längsschlitz 3 und das Langloch 4 der Montageschiene 2 breit ist, das nicht breiter ist als der Längsschlitz 3 und das Langloch 4 der Montageschiene 2 breit sind und das nicht länger ist als das Langloch 4 der Montageschiene 2 lang ist. Eine Achse 10 eines Schraubenschafts 11 beziehungsweise eines Gewindes 12 der Hammerkopfschraube 5 bildet zugleich eine Achse 10 des Befestigers 1.

Die Lochscheibe 7 bildet ein Druckstück 13 des Befestigers 1 und ihr Mittelloch ein Durchgangsloch 14 des Druckstücks 13. Ein Außendurchmesser des Gewindes 12 der Hammerkopfschraube 5 ist nicht größer als ein Durchmesser des Durchgangslochs 14. Eine dem Schraubenkopf 8 zugewandte Fläche der das Druckstück 13 bildenden Lochscheibe 7 bildet eine Anlagefläche 15 des Druckstücks 13. In zusammengesetztem Zustand des Befestigers 1 durchgreift der Schraubenschaft 11 das Mittelloch bzw. Durchgangsloch 14, so dass das Druckstück 13, das Durchgangsloch 14, der Schraubenschaft 11 und das Gewinde 12 der Hammerkopfschraube 5 gleichachsig sind. Ein Durchmesser des Druckstücks 13 ist größer als der das Widerlager 9 bildende Schraubenkopf 8 der Hammerkopfschraube 5 lang ist.

Anstelle der Hammerkopfschraube 5 kann der erfindungsgemäße Befestiger 1 eine Rechteckmutter aufweisen, in die beispielsweise eine Gewindestange, die das Durchgangsloch 14 des Druckstücks 13 durchgreift, eingeschraubt wird bzw. ist (nicht dargestellt). Die Rechteckmutter ersetzt den Schraubenkopf 8 der Hammerkopfschraube 5 und die Gewindestange den Schraubenschaft 11.

Radial zur Achse 10 des Befestigers 1 gesehen, hat der Bügel 6 die Form eines rechteckigen U's, wobei Schenkel 16 des U's parallel zueinander und senkrecht zur Anlagefläche 15 des Druckstücks 13 und ein Joch 17 parallel zur Anlagefläche 15 des Druckstücks 13 angeordnet sind. Zu einer Befestigung an dem Druckstück 13 weisen die Schenkel 16 hakenförmige Rastelemente 18 auf, die in Schlitzen 19 der das Druckstück 13 bildenden Lochscheibe 7 eingerastet werden beziehungsweise sind, so dass der Bügel 6 und das Druckstück 13 drehfest verbunden sind. Das Joch 17 befindet sich auf einer dem Druckstück 13 abgewandten Seite des das Widerlager 9 des erfindungsgemäßen Befestigers 1 bildenden Schraubenkopfs 8 der Hammerkopfschraube 5. Ein lichter Abstand der beiden Schenkel 16 des Bügels 6 ist etwas größer als das Widerlager 9 lang ist, so dass das Widerlager 9 parallel bzw. längs zu bzw. in einer Ebene mit dem Bügel 6 ausgerichtet zwischen den Schenkeln 16 Platz findet. Der Bügel 6 ist nicht breiter als das Widerlager 9.

Entlang eines senkrecht zu der Anlagefläche 15 des Druckstücks 13 verlaufenden Randes weisen die beiden Schenkel 16 des Bügels 6 eine leistenförmige Abwinklung auf, die einen Anschlag 20 für das Widerlager 9 und oder für Anschlagflächen 24 von nachfolgend näher beschriebenen Kragarmen 22 bildet. Die Anschläge 20 sind einander diametral, symmetrisch zur Achse 10, gegenüber an den Rändern der Schenkel 16 angeordnet. Sie begrenzen einen Schwenkwinkel des Widerlagers 9 um die Achse 10 in einer Richtung. Liegt das Widerlager 9 an den Anschlägen 20 an, ist es längs bzw. parallel zu bzw. in einer Ebene mit dem Bügel 6 ausgerichtet.

An der Anlagefläche 15 des Druckstücks 13 weisen die Schenkel 16 des Bügels 6 dreiecksförmige Halter 21 auf. Befindet sich das Widerlager 9 zwischen den Anschlägen 20 und den Haltern 21, ist es drehfest im Bügel 6 gehalten.

Nahe dem Joch 17 weist der Bügel 6 elastische Kragarme 22 auf, die axial gesehen nebeneinander, und bezogen auf die Achse 10 symmetrisch am Bügel 6 angeordnet sind und von einer Seite, das heißt radial zur Achse 10, in einer Axialebene gesehen, einander kreuzen. Die beiden Kragarme 22 befinden sich auf einer dem Druckstück 13 abgewandten Seite des Widerlagers 9 im Bügel 6. Dem Widerlager 9 ferne Enden der Kragarme 22 sind fest mit dem Bügel 6 verbunden, im Ausführungsbeispiel sind die elastischen Kragarme 22 einstückiger Bestandteil des Bügels 6. Die Kragarme 22 verlaufen schräg zwischen den beiden Schenkeln 16 des Bügels 6, wobei freie Enden der Kragarme 22 am Widerlager 9 anliegen und das Widerlager 9 gegen die Anlagefläche 15 des Druckstücks 13 beaufschlagen. Die elastischen Kragarme 22 können auch als Federelemente aufgefasst werden. Die Kragarme 22 stehen seitlich, d. h. radial zur Achse 10 des Befestigers 1, nicht aus dem Bügel 6 vor.

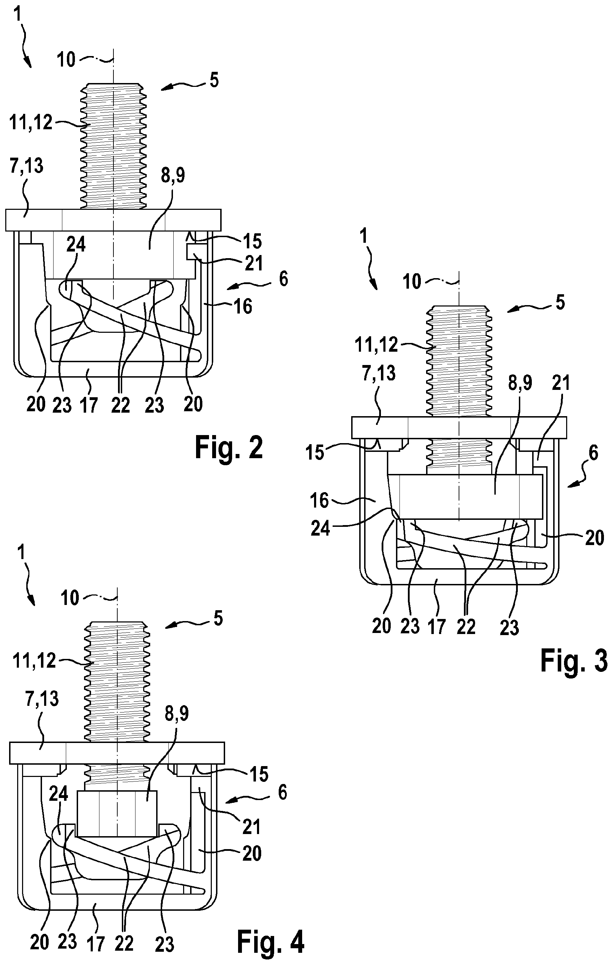

Zu einer Befestigung an der Montageschiene 2 befindet sich das Widerlager 9 an der Anlagefläche 15 des Druckstücks 13 und zwischen den Anschlägen 20 und den Haltern 21 im Bügel 6. Das Widerlager 9 ist längs bzw. parallel zu bzw. in einer Ebene mit dem Bügel 6 ausgerichtet, so dass der Bügel 6 nicht seitlich über das Widerlager 9 übersteht. Es werden der Bügel 6 und das Widerlager 9 längs zum Längsschlitz 3 bzw. längs zu einem Langloch 4 der Montageschiene 2 ausgerichtet durch den Längsschlitz 3 bzw. das Langloch 4 in die Montageschiene 2 eingebracht, bis die Anlagefläche 15 des Druckstücks 13 außen an der Montageschiene 2 anliegt. Diese Stellung des Befestigers 1, allerdings ohne Montageschiene, zeigt Figur 2. Dabei kann der Befestiger 1 am Schraubenschaft 11 der Hammerkopfschraube 5 gehalten werden. Sofern der Befestiger 1 eine Rechteckmutter mit eingeschraubter Gewindestange anstelle der Hammerkopfschraube 5 aufweist (nicht dargestellt), kann der Befestiger 1 an der Gewindestange gehalten werden.

Wenn die Anlagefläche 15 des Druckstücks 13 außen an der Montageschiene 2 anliegt, wird das Widerlager 9 gegen Federkräfte der elastischen Kragarme 22 axial, das heißt in Richtung der Achse 10, tiefer in die Montageschiene 2 eingedrückt, so dass das Widerlager 9 von den Haltern 21 freikommt, wie es in Figur 3 zu sehen ist, und um 90° um die Achse 10 des Befestigers 1 um 90° geschwenkt (Figur 4). Dabei hintergreifen Anschlagflächen 24 der freien Enden der Kragarme 22 die Anschläge 20, wodurch verhindert wird, dass die Kragarme 22 sich verbiegen oder abbrechen. Das Widerlager 9 steht nun quer zum Längsschlitz 3 bzw. zum Langloch 4 in der Montageschiene 2 und hintergreift die Montageschiene 2 innen seitlich des Längsschlitzes 3 bzw. an Längsrändern des Langlochs 4. Das Widerlager 9 bzw. der Schraubenschaft 11 werden jetzt losgelassen und dadurch von den elastischen Kragarmen 22 von innen gegen die Montageschiene 2 gedrückt. Auf diese Weise drücken die elastischen Kragarme 22 das Widerlager 9 von innen und das Druckstück 13 von außen gegen die Montageschiene 2, wodurch der Befestiger 1 durch Reibkraft gegen Verrutschen entlang der Montageschiene 2 gehalten ist.

An ihren freien Enden weisen die Kragarme 22 in Richtung des Widerlagers 9 abstehende Köpfe 23 auf, gegen die Längsseiten des Widerlagers 9 stoßen, wenn es geschwenkt wird. Das zeigt Figur 4. Mit den Köpfen 23 begrenzen die Kragarme 22 den Schwenkwinkel des Widerlagers 9 in einer entgegengesetzten Richtung, wie die Anschläge 20 an den Längsrändern der Schenkel 16 des Bügels 6. Die Kragarme 22 begrenzen mit ihren Köpfen 23 den Schwenkwinkel des Widerlagers 9 im Ausführungsbeispiel auf etwa 90° so, dass es quer zum Bügel 6 steht. In dieser Stellung steht das Widerlager 9 quer zum Längsschlitz 3 bzw. zum Langloch 4 in der Montageschiene 2.

Auf den nach außen aus der Montageschiene 2 vorstehenden Schraubenschaft 11 der Hammerkopfschraube 5 kann eine nicht dargestellte Mutter aufgeschraubt werden, mit der das Druckstück 13 von außen und das Widerlager 9 von innen so fest gegen die Montageschiene 2 gespannt werden, dass sich der Befestiger 1 nicht verschiebt, auch wenn er in Längsrichtung der Montageschiene 2 belastet wird. An dem Schraubenschaft 11 kann ein Gegenstand, beispielsweise eine Kabel- oder Rohrschelle oder eine Kabelpritsche befestigt werden (nicht dargestellt).

### Bezugszeichenliste

### Befestiger für eine Befestigung an einer Montageschiene

- 1: Befestiger
- 2: Montageschiene
- 3: Längsschlitz
- 4: Langloch
- 5: Hammerkopfschraube
- 6: Bügel
- 7: Lochscheibe
- 8: Schraubenkopf
- 9: Widerlager
- 10: Achse
- 11: Schraubenschaft
- 12: Gewinde
- 13: Druckstück
- 14: Durchgangsloch
- 15: Anlagefläche
- 16: Schenkel
- 17: Joch
- 18: Rastelement
- 19: Schlitz
- 20: Anschlag
- 21: Halter
- 22: Kragarme
- 23: Kopf
- 24: Anschlagfläche

## Patentansprüche

1. Befestiger für eine Befestigung an einer Montageschiene, mit einer Achse (10), mit einem Druckstück (13), das ein axiales Durchgangsloch (14) und eine Anlagefläche (15) in einer Radialebene der Achse (10), die zu einer Anlage außen an einer Montageschiene (2) vorgesehen ist, aufweist, mit einem Widerlager (9), das zu einer Anlage von innen in einer Montageschiene (2) vorgesehen ist, das länger als breit ist, das ein sich in axialer Richtung erstreckendes Gewinde (12) aufweist, dessen Gewindeaußendurchmesser nicht größer als ein Durchmesser des Durchgangslochs (14) des Druckstücks (13) ist, wobei das Widerlager (9) in einer Richtung radial zur Achse (10) des Befestigers (1) schmaler ist als das Druckstück (13) und in Bezug auf das Druckstück (13) um die Achse (10) des Befestigers (1) schwenkbar ist, und wobei das Widerlager (9) in Bezug auf das Druckstück (13) axial beweglich ist, mit einem Bügel (6), der an dem Druckstück (13) angeordnet ist, dessen lichte Weite mindestens so groß wie das Widerlager (9) lang ist, der das Widerlager (9) umgreift und der in einer Richtung radial zur Achse (10) des Befestigers (1) nicht breiter als das Widerlager (9) ist, **dadurch gekennzeichnet, dass** in dem Bügel (6) auf einer dem Druckstück (13) abgewandten Seite des Widerlagers (9) zwei elastische Kragarme (22) angeordnet sind, die schräg zur Achse (10) des Befestigers (1) verlaufen und senkrecht zu einer Axialebene des Befestigers (1) gesehen einander kreuzen, deren dem Widerlager (9) fernen Enden am Bügel (6) festgelegt sind und deren freien Enden das Widerlager (9) elastisch in Richtung des Druckstücks (13) beaufschlagen.

2. Befestiger nach Anspruch 1, **dadurch gekennzeichnet, dass** die Kragarme (22) einen Schwenkwinkel des Widerlagers (9) um die Achse (10) des Befestigers (1) so begrenzen, dass in axialer Richtung der Befestigers (1) gesehen das Widerlager (9) schräg oder quer zu dem Bügel (6) steht.

3. Befestiger nach Anspruch 1, **dadurch gekennzeichnet, dass** die Kragarme (22) den Schwenkwinkel des Widerlagers (9) auf 90° begrenzen, so dass in axialer Richtung der Befestigers (1) gesehen das Widerlager (9) quer zu dem Bügel (6) steht.

4. Befestiger nach einem der Ansprüche 1 bis 3, **dadurch gekennzeichnet, dass** der Bügel (6) einen Schwenkwinkel des Widerlagers (9) in einer Richtung so begrenzt, dass in axialer Richtung des Befestigers (1) gesehen der Bügel (6) und das Widerlager (9) parallel sind.

5. Befestiger nach einem der vorhergehenden Ansprüche, **dadurch gekennzeichnet, dass** das Widerlager (9) eine zum Befestiger (1) koaxiale Mutter oder ein Schraubenkopf (8) einer Hammerkopfschraube (5) ist, deren Schraubenschaft (11) durch das Durchgangsloch (14) des Druckstücks (13) hindurch geht.

6. Befestiger nach einem der vorhergehenden Ansprüche, **dadurch gekennzeichnet, dass** der Bügel (6) U-förmig oder C-förmig ist.

7. Befestiger nach einem der vorhergehenden Ansprüche, **dadurch gekennzeichnet, dass** das Druckstück (13) eine Lochscheibe (7) ist.

8. Befestiger nach einem der vorhergehenden Ansprüche, **dadurch gekennzeichnet, dass** am Bügel (6) ein Anschlag (20) angeordnet ist.

9. Befestiger nach Anspruch 8, **dadurch gekennzeichnet, dass** am Bügel (6) zwei Anschläge (20) symmetrisch zur Achse (10) angeordnet sind.

10. Befestiger nach einem der vorhergehenden Ansprüche, **dadurch gekennzeichnet, dass** die Kragarme (22) symmetrisch zur Achse (10) am Bügel (6) angeordnet sind.

## Claims

1. Fixing device for a fixing on a mounting rail, having an axis (10), having a pressure element (13) which has an axial through-hole (14) and a bearing surface (15) in a radial plane of the axis (10), which bearing surface is provided for bearing externally against a mounting rail (2), having a counter-bearing (9) which is provided for bearing against a mounting rail (2) from the inside, which counter-bearing is longer than it is wide and has a thread (12) extending in an axial direction, the thread external diameter of which is not greater than a diameter of the through-hole (14) of the pressure element (13), wherein the counter-bearing (9) is narrower than the pressure element (13) in a direction radial with respect to the axis (10) of the fixing device (1) and is pivotable relative to the pressure element (13) about the axis (10) of the fixing device (1), and wherein the counter-bearing (9) is movable axially relative to the pressure element (13), having a curved element (6) which is arranged on the pressure element (13) and the inside width of which is at least as great as the counter-bearing (9) is long and which engages around the counter-bearing (9) and which is not wider than the counter-bearing (9) in a direction radial with respect to the axis (10) of the fixing device (1), **characterised in that** in the curved element (6), on a side of the counter-bearing (9) facing away from the pressure element (13), there are arranged two resilient cantilever arms (22) which run obliquely with respect to the axis (10) of the fixing device (1) and cross one another, seen perpendicularly to an axial plane of the fixing device (1), and the ends of which remote from the counter-bearing (9) are fixed in place on the curved element (6) and the free ends of which urge the counter-bearing (9) resiliently in the direction of the pressure element (13).

2. Fixing device according to claim 1, **characterised in that** the cantilever arms (22) limit a pivot angle of the counter-bearing (9) about the axis (10) of the fixing device (1) so that, seen in an axial direction of the fixing device (1), the counter-bearing (9) is in a slantwise or crosswise position with respect to the curved element (6).

3. Fixing device according to claim 1, **characterised in that** the cantilever arms (22) limit the pivot angle of the counter-bearing (9) to 90° so that, seen in an axial direction of the fixing device (1), the counter-bearing (9) is in a crosswise position with respect to the curved element (6).

4. Fixing device according to any one of claims 1 to 3, **characterised in that** the curved element (6) limits a pivot angle of the counter-bearing (9) in one direction so that, seen in an axial direction of the fixing device (1), the curved element (6) and the counter-bearing (9) are parallel.

5. Fixing device according to any one of the preceding claims, **characterised in that** the counter-bearing (9) is a nut coaxial with the fixing device (1) or a screw head (8) of a hammerhead screw (5), the screw shank (11) of which passes through the through-hole (14) of the pressure element (13).

6. Fixing device according to any one of the preceding claims, **characterised in that** the curved element (6) is U-shaped or C-shaped.

7. Fixing device according to any one of the preceding claims, **characterised in that** the pressure element (13) is an apertured disc (7).

8. Fixing device according to any one of the preceding claims, **characterised in that** a stop (20) is arranged on the curved element (6).

9. Fixing device according to claim 8, **characterised in that** two stops (20) are arranged on the curved element (6) symmetrically with respect to the axis (10).

10. Fixing device according to any one of the preceding claims, **characterised in that** the cantilever arms (22) are arranged on the curved element (6) symmetrically with respect to the axis (10).

## Revendications

1. Elément de fixation conçu pour une fixation à un rail de montage, comprenant un axe (10) ; une pièce de pression (13) munie d'un trou axial traversant (14) et, dans un plan radial dudit axe (10), d'une surface de contact (15) prévue pour venir extérieurement en applique contre un rail de montage (2) ; une contre-butée (9) prévue pour venir en applique depuis l'intérieur dans un rail de montage (2), pourvue d'une longueur excédant sa largeur et dotée d'un filetage (12) qui s'étend dans la direction axiale et dont le diamètre extérieur n'est pas supérieur à un diamètre du trou traversant (14) de la pièce de pression (13), sachant que la contre-butée (9) est plus étroite que la pièce de pression (13) dans une direction radiale par rapport à l'axe (10) de l'élément de fixation (1) et peut pivoter, par rapport à ladite pièce de pression (13), autour dudit axe (10) de l'élément de fixation (1), et sachant que ladite contre-butée (9) est douée de mobilité axiale par rapport à ladite pièce de pression (13) ; et un étrier (6) qui est implanté sur la pièce de pression (13), est muni d'une largeur intérieure au moins égale à la longueur de la contre-butée (9), ceinture ladite contre-butée (9) et n'est pas plus large que ladite contre-butée (9) dans une direction radiale par rapport audit axe (10) dudit élément de fixation (1), **caractérisé par le fait que** deux bras élastiques (22) en porte-à-faux, situés dans l'étrier (6) sur un côté de la contre-butée (9) tourné à l'opposé de la pièce de pression (13), s'étendent à l'oblique par rapport à l'axe (10) de l'élément de fixation (1) et s'entrecroisent en observant perpendiculairement à un plan axial dudit élément de fixation (1), les extrémités desdits bras, éloignées de la contre-butée (9), étant assujetties audit étrier (6), et leurs extrémités libres sollicitant élastiquement ladite contre-butée (9) en direction de la pièce de pression (13).

2. Elément de fixation selon la revendication 1, **caractérisé par le fait que** les bras (22) en porte-à-faux limitent un angle de pivotement de la contre-butée (9), autour de l'axe (10) dudit élément de fixation (1), de manière que ladite contre-butée (9) pointe obliquement ou transversalement par rapport à l'étrier (6) en observant dans la direction axiale dudit élément de fixation (1).

3. Elément de fixation selon la revendication 1, **caractérisé par le fait que** les bras (22) en porte-à-faux cantonnent l'angle de pivotement de la contre-butée (9) à 90°, de telle sorte que ladite contre-butée (9) pointe transversalement par rapport à l'étrier (6) en observant dans la direction axiale dudit élément de fixation (1).

4. Elément de fixation selon l'une des revendications 1 à 3, **caractérisé par le fait que** l'étrier (6) limite un angle de pivotement de la contre-butée (9) dans une direction, de façon telle que ledit étrier (6) et ladite contre-butée (9) soient parallèles en observant dans la direction axiale dudit élément de fixation (1).

5. Elément de fixation selon l'une des revendications précédentes, **caractérisé par le fait que** la contre-butée (9) est un écrou coaxial audit élément de fixation (1), ou bien la tête (8) d'une vis (5) à tête rectangulaire dont la tige (11) franchit, de part en part, le trou traversant (14) de la pièce de pression (13).

6. Elément de fixation selon l'une des revendications précédentes, **caractérisé par le fait que** l'étrier (6) est configuré en U ou en C.

7. Elément de fixation selon l'une des revendications précédentes, **caractérisé par le fait que** la pièce de pression (13) est un disque perforé (7).

8. Elément de fixation selon l'une des revendications précédentes, **caractérisé par le fait qu'**un arrêtoir (20) est disposé sur l'étrier (6).

9. Elément de fixation selon la revendication 8, **caractérisé par le fait que** deux arrêtoirs (20) sont disposés sur l'étrier (6), symétriquement par rapport à l'axe (10).

10. Elément de fixation selon l'une des revendications précédentes, **caractérisé par le fait que** les bras (22) en porte-à-faux sont disposés, sur l'étrier (6), symétriquement par rapport à l'axe (10).
